# FASCICULE DE BREVET EUROPEEN

(11) **EP 0 555 115 B1**
(45) Date de publication et mention de la délivrance du brevet: **27.09.1995**
(21) Numéro de dépôt: 93400140.5
(22) Date de dépôt: 21.01.1993
(51) Int. Cl.: B60R 13/06

(54) **Joint d'étanchéité pour pièces de carrosserie automobile**
Dichtung für Automobil-Karrosserieteile
Sealing gasket for vehicle body parts

(30) Priorité: 06.02.1992 FR 9201357
(43) Date de publication de la demande: 11.08.1993
(73) Titulaire: POMMIER & CIE, 95310 Saint Ouen L'Aumone (FR)
(72) Inventeur: Froissard, Alain, F-95100 Argenteuil (FR)
(74) Mandataire: Madeuf, René Louis

(56) Documents cités:
- EP-A- 0 251 765
- DE-A- 3 739 606
- DE-B- 2 929 837
- DE-U- 8 702 854
- FR-A- 2 593 445

## Description

Dans de nombreux domaines de la technique et notamment dans la carrosserie automobile, on utilise des Joints dits à bidureté qui comportent une partie d'emboîtement d'un support, par exemple un panneau ou une autre paroi. Le joint délimite par ailleurs des parties en matière souple, lèvres ou bourrelets, formées d'une pièce avec la partie en matière plus dure d'emboîtement. Les parties en matière souple doivent assurer une étanchéité aussi complète que possible avec une autre pièce, par exemple un panneau de porte ou analogue. La partie d'emboîtement est le plus souvent collée sur la paroi qu'elle chevauche et son démontage est très difficile s'il y a lieu de changer le joint, notamment en cas d'avarie de la partie d'étanchéité en matière souple. Le document EP-A-0 251 765, selon les caractéristiques du préambale de le revendication 1, décrit un tel type de joint d'étanchéité.

L'invention remédie à l'inconvénient mentionné ci-dessus et permet en outre d'adapter éventuellement des joints de formes et duretés différentes sur une même partie d'emboîtement.

Conformément à l'invention, le joint pour pièces de carrosserie automobile est caractérisé en ce que ledit joint d'étanchéité est composé de deux profilés distincts et séparables et ledit premier profilé en forme de U délimit des moyens d'accrochage pour le seconde profilé chevauchant ledit premier profilé et comportant les parties souples d'étanchéité pour un panneau.

Une forme de réalisation de l'objet de l'invention est représentée, à titre d'exemple non limitatif, au dessin annexé.

La fig. 1 est une coupe transversale d'un mode de réalisation d'un joint complexe selon l'invention.

La fig. 2 est une coupe-élévation d'un des profilés apparaissant à la fig.1.

La fig. 3 est une coupe d'une variante.

Dans la réalisation illustrée par le dessin, le joint comporte un premier profilé 1 présentant un fond 2 et des ailes latérales 3, 4. Le dessous du fond 2 présente avantageusement des nervures 5 et des rainures 6 s'étendant longitudinalement.

Les ailes latérales 3, 4 sont formées à partir des deux côtés du fond 2 et y sont raccordées par des segments amincis 7 faisant que ces ailes 3, 4 peuvent pivoter légèrement par rapport audit fond 2.

Il est avantageux que les ailes 3, 4 présentent, en section, sensiblement la forme d'un trapèze et délimitent, à leurs extrémités, des lèvres effilées 8, 9 se faisant vis-à-vis. Au repos, les faces internes des ailes 3, 4, qui sont de préférence planes, convergent légèrement l'une vers l'autre pour constituer des pinces élastiques destinées à serrer les côtés 10, 11 d'une paroi 12 devant être munie du joint.

Les rainures 6 sont destinées à permettre la mise en place éventuelle d'un produit adhésif pour l'immobilisation définitive du profilé 1 sur la paroi 12.

Les lèvres effilées 8, 9, qui sont écartées lors de la mise en place du profilé 1, assurent l'étanchéité avec les côtés 10, 11 de la paroi 12 et empêchent, le cas échéant, l'écoulement de l'adhésif.

Le dessin montre que les segments amincis 7 délimitent avec les extrémités 2a, 2b du fond 2 des encoches 13, 14.

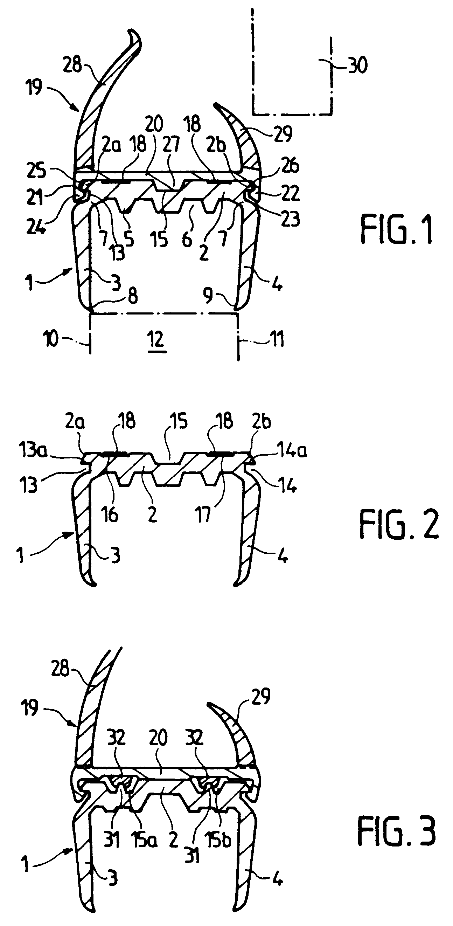

Le dessin, en particulier la fig. 2, montre que le fond 2 est prolongé pour délimiter des encoches 13, 14 dont le bord supérieur 13a, 14a est plat pour constituer une retenue. Les extrémités 2a, 2b du fond 2 sont biseautées ou arrondies.

Outre ce qui précède, le fond 2 délimite, sur son dessus, une rainure 15 relativement profonde, par exemple de l'ordre de 2 mm, et de préférence deux rainures 16, 17 peu profondes, par exemple de l'ordre de 0,5 mm, qui sont destinées à contenir un mastic ou un autre moyen d'étanchéité 18. La rainure 15 est avantageusement trapézoïdale ou triangulaire.

Le profilé 1, décrit dans ce qui précède, est destiné à coopérer avec le segment profilé 19 illustré par la fig. 1.

Le profilé 19 comporte une base 20 plane délimitant latéralement des pattes d'ancrage 21, 22 tournées vers le bas dont le dessous délimite des rampes 23, 24 menant vers des encoches 25, 26, complémentaires aux extrémités 2a, 2b du fond 2 du premier profilé 1.

La base 20 délimite de plus une nervure 27 de forme complémentaire à la rainure profonde 15 du fond 2.

Le fond 2 forme sur ses côtés latéraux des lèvres souples 28, 29 pour assurer l'étanchéité avec un panneau mobile, par exemple le panneau figuré en 30 à la fig. 1.

Les profilés 1 et 19 peuvent être fabriqués en différentes matières, par exemple en polychlorure de vinyle, en élastomère, etc...

De préférence, le profilé 1 est fabriqué en matière relativement rigide mais présentant néanmoins une élasticité suffisante pour permettre la déformation élastique des ailes latérales 3, 4 destinées à être appliquées sur les côtés 10, 11 de la paroi 12.

Le profilé 19 est aussi de préférence réalisé en matière relativement rigide pour ce qui concerne la base 20 et les pattes 22 et en matière sensiblement plus souple et élastique en ce qui concerne les lèvres 28, 29.

Comme cela ressort de la description qui précède, le joint décrit peut être pré-assemblé avant d'être monté sur la paroi 12. Dans ce cas, il suffit d'emboîter par pression les ailes 3, 4 sur ladite paroi 12. Un collage peut être réalisé mais n'est pas nécessaire dans tous les cas. Il apparaît cependant préférable pour permettre d'assurer une étanchéité totale du joint sur la paroi 12.

Si, pour un motif quelconque, le profilé 19 est endommagé, il suffit de dégager, par exemple à l'aide d'un tournevis, l'une des pattes 23 ou 24 pour déverrouiller, au moins sur un tronçon de faible longueur, le profilé 19 du profilé 1. Ensuite, il suffit d'exercer une traction sur le profilé 19 pour le retirer complètement. Un nouveau profilé 19 peut ensuite être mis en place sur le dessus du fond 2 en l'appliquant fermement de manière à le clipser sur les extrémités 2a, 2b du fond 2, la mise en place correcte étant facilitée par l'existence de la nervure 27 qui assure le centrage automatique au fur et à mesure de l'emboîtement du profilé 19 sur le profilé 1 demeuré en place.

Suivant la variante de la fig. 3, les mêmes numéros de référence désignent les mêmes organes qu'aux figures précédentes. Deux rainures de centrage 15a, 15b sont prévues dans le profilé 1 et contiennent chacune une nervure 31 destinée à presser un ruban souple correspondant 32 formé ou rapporté sous la base 20 du profilé 19.

Bien que cela ne soit pas représenté, le profilé 1 peut recevoir des profilés 19 de formes et dimensions diverses, et les lèvres 28, 29 peuvent être remplacées par un bourrelet ou plus de deux lèvres peuvent être prévues à partir, de la base 20. De même la base 20 peut ne comporter qu'une lèvre d'appui. Le mastic d'étanchéité 18 peut, le cas échéant, être remplacé par un bourrelet souple ou tout autre moyen équivalent. Cette dernière réalisation permet de reconstituer l'étanchéité après chaque changement du profilé 19.

## Revendications

1. Joint d'étanchéité pour pièces de carrosserie automobile, comprenant un premier profilé (1) sensiblement en forme de U pour chevaucher et demeurer en place sur une paroi (12), et comportant des parties souples d'étanchéité pour un panneau, caractérisé en ce que ledit joint d'étanchéité est composé de deux profilés distincts et séparables et que ledit premier profilé (1) en forme de U délimite des moyens d'accrochage (2a, 2b) pour le second profilé (19) chevauchant ledit premier profilé (1) et comportant les parties souples d'étanchéité (28, 29) pour un panneau (30).

2. Joint selon la revendication 1, caractérisé par des moyens d'étanchéité (18) prévus entre les premier et second profilés.

3. Joint selon la revendication 1, caractérisé en ce que le premier profilé comporte un fond (2) comportant des extrémités saillantes (2a, 2b) au-dessus d'encoches (13, 14), lesdites extrémités (2a, 2b) étant biseautées pour coopérer avec des rampes (23, 24) formées de pattes (21, 22) délimitées latéralement en dessous de la base (20) du second profilé (19).

4. Joint selon l'une des revendications 1 à 3, caractérisé en ce que les pattes d'ancrage (21, 22) formées en dessous de la base (20) du second profilé (19) délimitent des encoches (25, 26) d'emboîtement des extrémités (2a, 2b) du fond (2) du premier profilé qui délimite de son côté des encoches (13, 14).

5. Joint selon l'une des revendications 1 à 4, caractérisé en ce que les encoches (13, 14) du premier profilé présentent un bord supérieur plat de retenue (13a, 14a).

6. Joint selon l'une des revendications 1 à 5, caractérisé en ce que le premier profilé (1) délimite une rainure profonde (15) dans le dessus de son fond (2) et en ce que le second profilé (19) délimite une nervure (27) complémentaire à la rainure (15) pour assurer le centrage mutuel des deux profilés lors de la mise en place par emboîtement du second profilé (19) sur le premier profilé (1).

7. Joint selon l'une des revendications 1 à 6, caractérisé en ce que les moyens d'étanchéité comportent un mastic (18) ou un bourrelet souple mis en place dans des rainures de faible profondeur prévues dans le dessus du fond (2) du premier profilé (1).

8. Joint selon l'une des revendications 1 à 7, caractérisé en ce que le premier profilé (1) présentant une forme de U comporte des ailes latérales (3, 4) de forme sensiblement trapézoïdale en section qui sont reliées au fond (2) par des segments amincis (7), lesdites ailes (3, 4) présentant, en outre, à leurs extrémités des lèvres effilées (8, 9).

9. Joint selon l'une des revendications 1 à 8, caractérisé en ce que le premier profilé (1) présente en dessous de son fond des nervures (5) et rainures (6).

10. Joint suivant la revendication 9, caractérisé par un adhésif mis en place dans les rainures (6).

11. Joint selon l'une des revendications 1 à 10, caractérisé en ce que le premier profilé est réalisé en matière relativement rigide du genre polychlorure de vinyle, élastomère et analogue et en ce que le second profilé comporte une base (20) en matière relativement rigide et des lèvres (28, 29) en matière souple.

## Claims

1. Sealing gasket for automobile vehicle body parts, comprising a first profile member (1) substantially in a U-shape for overlapping and remaining in place on a wall (12) and comprising sealing flexible parts for a panel, characterized in that said sealing gasket is formed of two distinct and separable profile members and that said first U-shaped profile member (1) forms means (2a, 2b) for hooking the second profile member (19) overlapping said first profile member (1) and comprising the sealing flexible parts (28, 29) for a panel (30).

2. Gasket according to claim 1, characterized by sealing means (18) provided between the first and second profile members.

3. Gasket according to claim 1, characterized in that the first profile member comprises a bottom (2) including protruding ends (2a, 2b) above notches (13, 14), said ends (2a, 2b) being of bevelled shape for cooperating with ramps (23, 24) formed by lugs (21, 22) formed laterally beneath the lower part (20) of the second profile member (19).

4. Gasket according to one of claims 1 to 3, characterized in that the anchoring lugs (21, 22) formed beneath the bottom (20) of the second profile member (19) define a set of notches (25, 26) for encasing the ends (2a, 2b) of the bottom (2) of the first profile member which defines, in its turn, a set of notches (13, 14).

5. Gasket according to one of claims 1 to 4, characterized in that the notches (13, 14) of the first profile member have a retaining flat upper edge (13a, 14a).

6. Gasket according to one of claims 1 to 5, characterized in that the first profile member (1) defines a deep groove (15) in the top of its bottom (2), and in that the second profile member (19) defines a rib (27) complementary to the groove (15) for providing the mutual centering of the two profile members upon the encased positioning of the second profile member (19) on the first profile member (1).

7. Gasket according to one of claims 1 to 6, characterized in that the sealing means comprises a mastic (18) or a flexible pad positioned in shallow grooves provided in the top of the bottom (2) of the first profile member (1).

8. Gasket according to one of claims 1 to 7, characterized in that the first U-shaped profile member (1) comprises side wings (3, 4) of a substantially trapezoidal cross-sectional shape, which are connected to the bottom (2) by means of thinnered segments (7), said wings (3, 4) being, further, provided at their ends with tapered lips (8, 9).

9. Gasket according to one of claims 1 to 8, characterized in that the first profile member (1) is provided beneath its bottom with ribs (5) and grooves (6).

10. Gasket according to claim 9, characterized by an adhesive installed in the grooves (6).

11. Gasket according to one of claims 1 to 10, characterized in that the first profile member is made of a relatively rigid material, such as vinyl polychloride, elastomeric and the like, and in that the second profile member comprises a lower part (20) of a relatively rigid material and lips (28, 29) of a flexible material.

## Patentansprüche

1. Dichtung für Automobilkarosserieteile, wobei sie ein erstes im wesentlichen U-förmiges Profil (1) zum Aufsetzen und Befestigen auf einer Wandung (12) und elastische Dichtungsteile für ein Paneel enthält, dadurch gekennzeichnet, daß die Dichtung aus zwei verschiedenen und trennbaren Profilen besteht und daß das erste U-förmige Profil (1) Verklammerungsmittel (2a, 2b) für das zweite Profil (19) aufweist, welches auf das erste Profil (1) aufsetzbar ist und mit den elastischen Dichtungsteilen (28, 29) für ein Paneel (30) ausgebildet ist.

2. Dichtung nach Anspruch 1, gekennzeichnet durch Dichtungselemente (18) zwischen dem ersten und dem zweiten Profil.

3. Dichtung nach Anspruch 1, dadurch gekennzeichnet, daß das erste Profil einen Boden (2) mit oberhalb von Aussparungen (13, 14) vorspringenden Rändern (2a, 2b) aufweist, wobei die Ränder (2a, 2b) mit Abfasungen versehen sind zum Zusammenwirken mit Schrägen (23, 24) an Klauen (21, 22), die seitlich unterhalb des Bodens (20) des zweiten Profils (19) ausgebildet sind.

4. Dichtung nach einem der Ansprüche 1 bis 3, dadurch gekennzeichnet, daß die unterhalb des Bodens (20) des zweiten Profils (19) vorgesehenen Verklammerungsklauen (21, 22) Aussparungen (25, 26) zur Aufnahme der Ränder (2a, 2b) des Bodens (2) des ersten Profils besitzen, der seinerseits Aussparungen (13, 14) aufweist.

5. Dichtung nach einem der Ansprüche 1 bis 4; dadurch gekennzeichnet, daß die Aussparungen (13, 14) des ersten Profils eine obere flache Halterungsseite (13a, 14a) aufweisen.

6. Dichtung nach einem der Ansprüche 1 bis 5, dadurch gekennzeichnet, daß das erste Profil (1) auf der Oberseite seines Bodens (2) eine tiefe Nut (15) aufweist, und daß das zweite Profil (19) eine in die Nut (15) passende Rippe (27) besitzt, um die gegenseitige Zentrierung der beiden Profile beim Aufsetzen des zweiten Profils (19) auf das erste Profil (1) zu gewährleisten.

7. Dichtung nach einem der Ansprüche 1 bis 6, dadurch gekennzeichnet, daß die Dichtungselemente aus einem Kitt (18) oder aus einer elastischen Dichtungsschnur bestehen und in Nuten geringer Tiefe auf der Oberseite des Bodens (2) des ersten Profils (1) eingelassen sind.

8. Dichtung nach einem der Ansprüche 1 bis 7, dadurch gekennzeichnet, daß das U-förmig ausgebildete erste Profil (1) seitliche Flügel (3, 4) von im wesentlichen trapezförmige Querschnitt enthält, die mit dem Boden (2) durch verjüngte Segmente (7) verbunden sind, wobei die Flügel (3, 4) darüberhinaus an ihren Enden konisch zulaufende Lippen (8, 9) aufweisen.

9. Dichtung nach einem der Ansprüche 1 bis 8, dadurch gekennzeichnet, daß das erste Profil (1) an der Unterseite seines Bodens mit Rippen (5) und Nuten (6) versehen ist.

10. Dichtung nach Anspruch 9, dadurch gekennzeichnet, daß in den Nuten (6) ein Kleber angebracht ist.

11. Dichtung nach einem der Ansprüche 1 bis 10, dadurch gekennzeichnet, daß das erste Profil aus einem relativ steifen Material in der Art von Polyvinylchlorid, Elastomer oder dergleichen besteht und daß das zweite Profil einen Boden (20) aus relativ steifem Material und Lippen (28, 29) aus elastischem Material besitzt.
